# EUROPEAN PATENT SPECIFICATION

(11) **EP 3 568 889 B1**
(45) Date of publication and mention of the grant of the patent: **10.03.2021**
(21) Application number: 18702571.3
(22) Date of filing: 16.01.2018
(51) Int. Cl.: H02G 1/10, B65H 54/10, B65H 75/44, B63B 35/04, H02G 11/02

(54) **DEVICE AND METHOD FOR REELING IN A CABLE FROM A SOURCE AND TEMPORARILY STORING THE CABLE**
VORRICHTUNG UND VERFAHREN ZUM AUFWICKELN EINES KABELS AUS EINER QUELLE UND ZUR VORÜBERGEHENDEN LAGERUNG DES KABELS
DISPOSITIF ET PROCÉDÉ D'ENROULEMENT D'UN CÂBLE À PARTIR D'UNE SOURCE ET DE STOCKAGE TEMPORAIRE DU CÂBLE

(30) Priority: 16.01.2017 NL 2018179
(43) Date of publication of application: 20.11.2019
(73) Proprietor: DEME Offshore NL B.V., 4817 ZG Breda (NL)
(72) Inventor: GREMMEN, Marco Martinus Maria, 5351 NN Berghem (NL); JASPERS, Jeroen, 2610 Wilrijk (Antwerpen) (BE); BOLS, Lucas Adriaan Maria, 2380 Ravels (BE)
(74) Representative: Brouwer, Hendrik Rogier
(86) International application number: PCT/NL2018/050030
(87) International publication number: WO 2018/132013

(56) References cited:
- EP-A1- 0 919 458
- EP-A1- 2 862 828
- WO-A1-84/04290
- WO-A1-2016/202809
- WO-A1-2017/135525
- CN-B- 102 774 712
- GB-A- 2 439 496
- NL-A- 8 600 821
- US-A- 3 093 333
- US-A1- 2015 139 736

## Description

### BACKGROUND OF THE INVENTION

The present invention relates to a vessel for laying cables on or in a sea bed. The invention further relates to a method for laying a cable on or in a sea bed using the vessel.

There is an increasing demand for laying cables, such as data communication and electrical cables on or in a seabed or the bed of another body of water. Such cables desirably have as few connections as possible, since connections represent possible sources of interference or disruption in transmission of the signal. Further, repairing or installing these connections involves an appreciable amount of time and money.

The quantity of cable that can be stored on board of a vessel as one continuous length is limited however. Storage units for cables such as cable carousels for instance are limited in size because of space restrictions on board of a vessel. Deck space is limited but building up cable carousels in the height direction is also limited for reasons of the required stability of the vessel. Indeed, the centre of gravity should not rise to high.

Document EP2862828 discloses a vessel for laying cables on or in a sea bed. Documents WO8404290 and GB2439496 disclose devices with storing units for cables. Further vessels for laying cables on or in a sea bed are known from EP0919458, US3093333, US2015139736, WO2016202809, and CN102774712.

It would be desirable to be able to reel in and store an increased amount of continuous cable on for instance a cable-laying vessel. It is an object of the present invention therefore to provide a device and method for reeling in a cable from a source and temporarily storing the cable that at least partly alleviates aforementioned and other disadvantages. Another object relates to providing a more efficient method for laying a cable on or in a sea bed using the floating structure.

### BRIEF SUMMARY OF THE INVENTION

The invention provides a vessel in accordance with claim 1. The vessel comprises a first and a second storage unit, each comprising a cylindrical body for arranging the cable; support means for carrying the cable from the source to cable seizing means of the second storage unit and further to the first storage unit; wherein the second storage unit is rotatable around a rotation axis parallel to the cylinder longitudinal axis in a reeling direction, in which the cable is reeled in from the source; and the storage units are arranged such that the second storage unit when rotating in the reeling direction can simultaneously reel in a part of the cable originating from the source and another part of the cable originating from the first storage unit.

The invention allows storing an increased length of cable relative to known devices, and further does not require extensive modifications to (the deck of) the cable laying vessel . The ability to store an increased length of continuous (non-interrupted) cable on such a vessel makes the cable laying operation more efficient; a longer trajectory may be followed with one vessel only.

In the invention, a cylinder longitudinal axis of the first storage unit does not coincide with the rotation axis of the second storage unit. In such an embodiment, the first and second storage units are not positioned on top of each other. This is advantageous on the vessel , since a stacked configuration of the storage units would require a substantial height and/or the positioning of one storage unit on deck and another storage unit below deck of the vessel. The present embodiment allows positioning the storage units side by side, more preferably such that the cylinder longitudinal axis of the first and/or second storage unit extends in a vertical direction. The storage units may then conveniently be placed below deck, thereby saving deck space.

According to the invention at least one of the storage units is rotatable around a rotation axis parallel to the cylinder longitudinal axis in a reeling direction, in which the cable is reeled in from the source. The first storage unit however may be stationary if this is more convenient. In a preferred embodiment the first storage unit is also rotatable around a rotation axis parallel to the cylinder longitudinal axis in a reeling direction in which the cable is reeled in from the source. This allows reeling in the cable more efficiently.

The second storage unit comprises cable seizing means configured to at least temporarily seize or hold the cable in the second storage unit to facilitate simultaneously reeling in a part of the cable originating from the source and another part of the cable originating from the first storage unit when the second storage unit is set in rotation in the reeling direction.

The invention provides a second storage unit, the cable seizing means of which comprise a cylindrical core provided with a passage for the cable extending in a cross-direction of the core. A cable that is carried from the source to the second storage unit is passed through the passage from one side of the core to another (opposite) side of the core, and then carried further to the first storage unit. A rotation of the second storage unit will wind the cable around the (centrally) disposed core from opposite sides of the core. The core thus acts as a seizing means for the cable.

In the above disclosed embodiments of the invention, the cable will experience some bending along a radius that may be close or equal to the radius of the cylindrical core. Care should be taken not to make this radius too small to avoid bending the cable over a radius that is smaller than the minimum bending radius (MBR) of the cable. The MBR is provided by the manufacturer of the cable. The radius of the cylindrical core is preferably equal to or larger than the MBR of the cable.

The device according to the invention comprises at least two storage units. Other embodiments however comprise more than two storage units arranged such that a storage unit n+1 when rotating in the reeling direction can simultaneously reel in a part of the cable originating from the source and another part of the cable originating from a storage unit n. The total length of stored cable may thus be increased.

The size of the storage units may be the same but an embodiment comprising storage units of different size, more preferably different circumferential size, is preferred. Such embodiment has shown to yield a higher efficiency.

The storage units may be of any known type, and suitable embodiments of the device provide first and/or second storage units comprising a reel, a carousel, a turntable or a static tank, or a combination of these.

The invention comprises the vessel which is preferably provided with a deck and at least two of the storage units are arranged below the deck. This allows saving deck space and a larger part of the deck can be used for other purposes, such as the storage of machines or other materials such as stones to cover the cable after laying, or protective sleeves for the cable.

In yet another aspect, the invention concerns a method according to claim 8.

The invented method allows to additionally storing some 50% or more of uninterrupted cable length, as compared to one storage unit only.

Preferred embodiments of the invention provide a wherein the first and the second filling degree comprises a substantially 100% filling; wherein the first storage unit rotates around a rotation axis parallel to the cylinder longitudinal axis in a reeling direction to reel in the cable; wherein the method comprises more than two storage units arranged such that rotating a storage unit n+1 in a reeling direction simultaneously reels in a part of the seized cable originating from the source and another part of the seized cable originating from a storage unit n; comprising storage units of different circumferential size; and/or wherein the first and/or the second storage unit comprise a reel, a carousel, a turntable or a static tank, or a combination of these.

The method is carried out on a vessel, which in a more preferred embodiment has a deck and at least two of the storage units are arranged below the deck.

In another aspect of the invention therefore, a method for laying a cable on or in a sea bed is provided, wherein a vessel for laying a cable on or in a sea bed is provided with a quantity of stored cable in accordance with the herein described method, the vessel sails on water and stored cable is unreeled from the first and second storage unit, brought overboard and laid on or in the sea bed.

### BRIEF DESCRIPTION OF THE DRAWINGS

The invention will now be described in more detail by reference to the attached figures, without however being limited thereto. In the figures:
Figure 1 schematically shows a perspective view of a rear deck part of a cable laying vessel according to one embodiment of the invention, wherein the deck is made transparent to show the below deck area;
Figure 2 schematically shows a perspective view of two storage units according to an embodiment of the invention;
Figure 3 schematically shows a number of method steps in accordance with an embodiment of the invention;
Figure 4 schematically shows a number of method steps in accordance with another embodiment of the invention;
Figure 5 schematically shows a side view of storage units in accordance with several embodiments of the invention;
Figure 6 schematically shows an isometric and side view of cylindrical cores of second storage units and possible cable paths according to the invention;
Figure 7 shows a graph of the uninterrupted cable length that can be stored in view of the number of storage units used in accordance with several embodiments of the invention; and finally
Figure 8 shows a graph of the uninterrupted total cable capacity that can be stored in view of the ratio of a smallest to largest storage unit used in accordance with several embodiments of the invention.

### DETAILED DESCRIPTION OF THE PREFERRED EMBODIMENTS

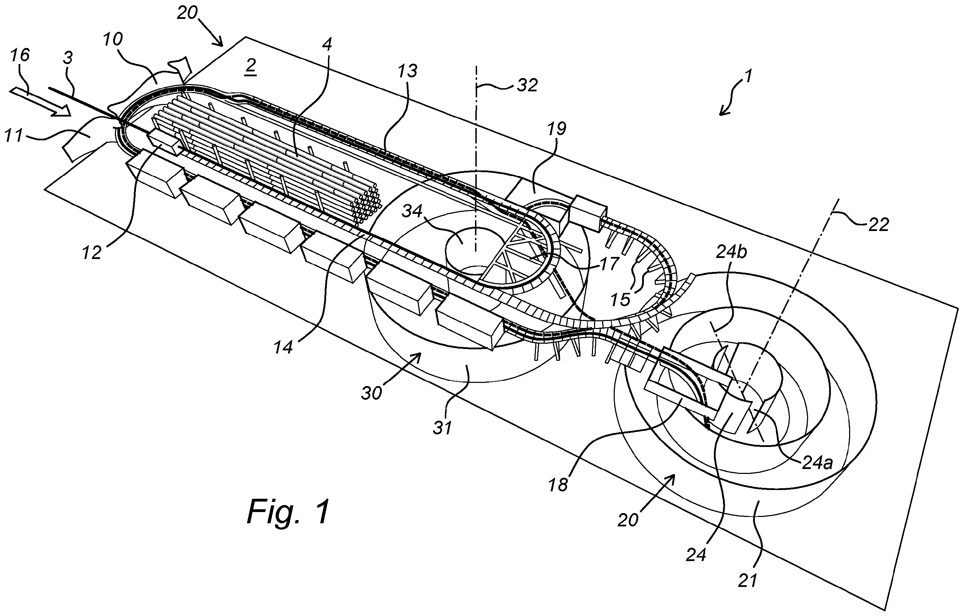

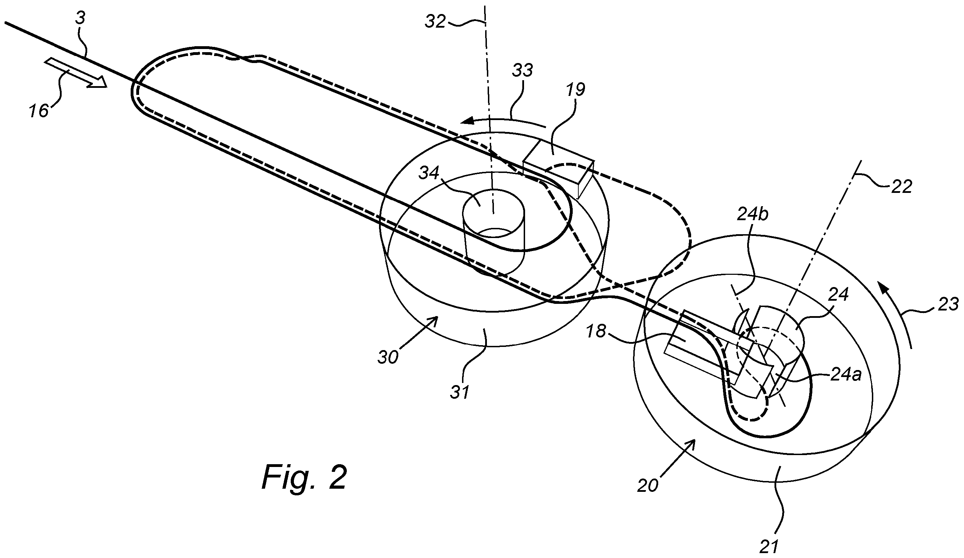

Referring to figure 1, a part of the deck 2 of a vessel 1 for laying cables 3 on or in a sea bed is shown. The vessel 1 is at a rear side 20 of the deck 2 provided with a portside chute 10 and a starboard chute 11 for guiding a cable 3. The chutes (10, 11) may be used to reel in a cable 3 from a suitable source, such as an onshore cable rack (not shown), but may also be used to bring out of board cable 3 during a cable laying operation off shore. A cable tensioner 12 may be present to pull the cable 3 along support means in the form of port side and starboard cable trays (13, 14). The cable trays (13, 14) are supported by poles 15 to elevate and hold the trays above work deck level. A cable 3 that is pulled in from shore in the direction 16 is first led along a so-called quadrant 17. This is also shown in figure 2. The quadrant structure 17guides a cable 3 along an arc with a radius that is equal or larger than the minimum bending radius (MBR) of the cable 3, this in order to prevent damaging or even breaking of the cable 3. As shown in figures 1 and 2, the cable 3 is guided further from the quadrant 17 along the starboard cable tray 14 to a deck penetration 18 which offers access to a second storage unit 20 provided in an area below deck 2. Cable 3 surfaces from this deck penetration 18 again (see below) and is then led over the quadrant 17 and back to another deck penetration 19 giving access to a first storage unit 30 provided in an area below deck 2.

As further shown in figure 1, the storage units (20, 30) are arranged below the deck, and each of the storage units (20, 30) comprises a cylindrical body (21, 31) in which the cable 3 can be arranged in a circumferential direction. As shown, the cylinder longitudinal axis 22 of the second storage unit 20 does not coincide with the cylinder longitudinal axis 32 of the first storage unit 30, and both storage units (20, 30) are spaced apart from each other. In the embodiment shown, the cylinder longitudinal axes (22, 32) of the second and first storage unit (20, 30) extend in a direction about perpendicular to the plane of the deck 2. This direction is substantially vertical. Other directions are also possible.

The second storage unit 20 is rotatable around a rotation axis parallel to the cylinder longitudinal axis 22 in a reeling direction 23, in which the cable 3 is reeled in from the source. Likewise, the first storage unit 30 is rotatable around a rotation axis parallel to the cylinder longitudinal axis 32 in a reeling direction 33 in which the cable 3 is reeled in from the source.

The second storage unit 20 is further provided with cable seizing means that in the embodiment shown comprises a cylindrical core 24 provided with a passage 24a for the cable 3. The passage 24a extends in a cross-direction 24b of the cylindrical core 24. The first storage unit 30 may also be provided with a cylindrical core 34.

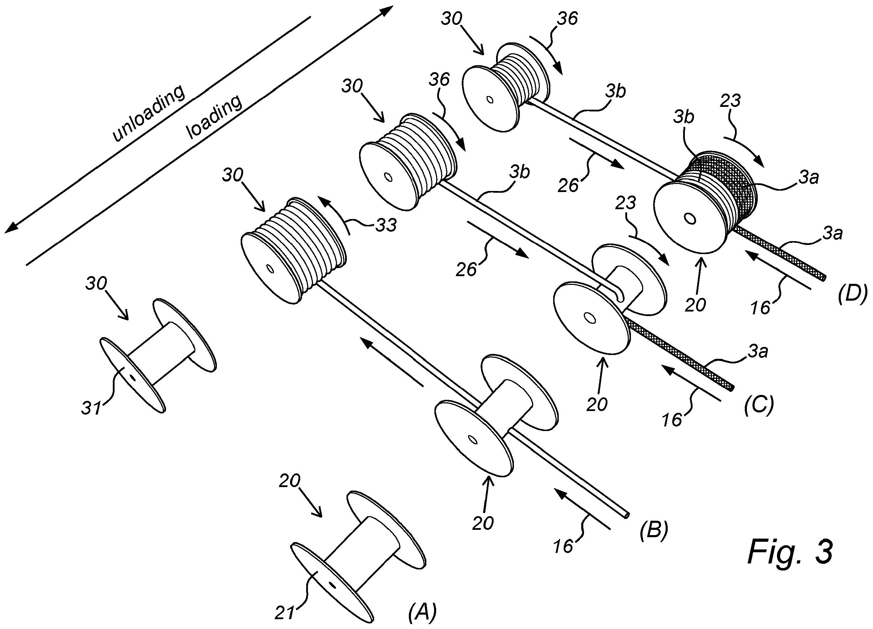

The principle of operation of the invented device can best be understood with reference to figure 3. The method for reeling in a cable 3 from a source and temporarily storing the cable 3 in a first step comprises (A) providing a first storage unit 30 and a second storage unit 20, each comprising a cylindrical body (31, 21) for arranging the cable 3. In a second step (B) the cable 3 is carried on the cable trays (13, 14) from a source through the passage 24a of the cylindrical core 24 of the second storage unit 20 and further to the first storage unit 30 and the cable is reeled in on the first storage unit 30 to a first filling degree, which in an embodiment is substantially a 100% filling, as shown. Reeling can be done by rotating the first storage unit 30 in the reeling direction 33. In a third step (C) the second storage unit 20 is rotated in its reeling direction 23 and, due to the fact that the cable 3 is caught by running through the passage 24a of its core 24, the second storage unit 20 in step (D) simultaneously reels in a part 3a of the seized cable 3 originating from the source in the direction 16 and another part 3b of the seized cable 3 originating from the first storage unit 30 in a direction 26. The first storage unit 30 in this process may be stationary or may rotate in a direction 36 opposite to its reeling direction 33. The second storage unit 20 is filled from the two sources until a second filling degree is reached, preferably until the second storage unit is filled for substantially 100%. The final filling degree of the first storage unit 30 will be less than 100% since a part 3b of the cable 3 was unreeled from the first storage unit 30 in the process.

When unreeling the stored cable 3, for instance in order to bring it overboard in a cable laying operation, the sequence of steps (A) to (D) is reversed and carried out in the sequence (D) to (A), as shown by the top arrows in figure 3.

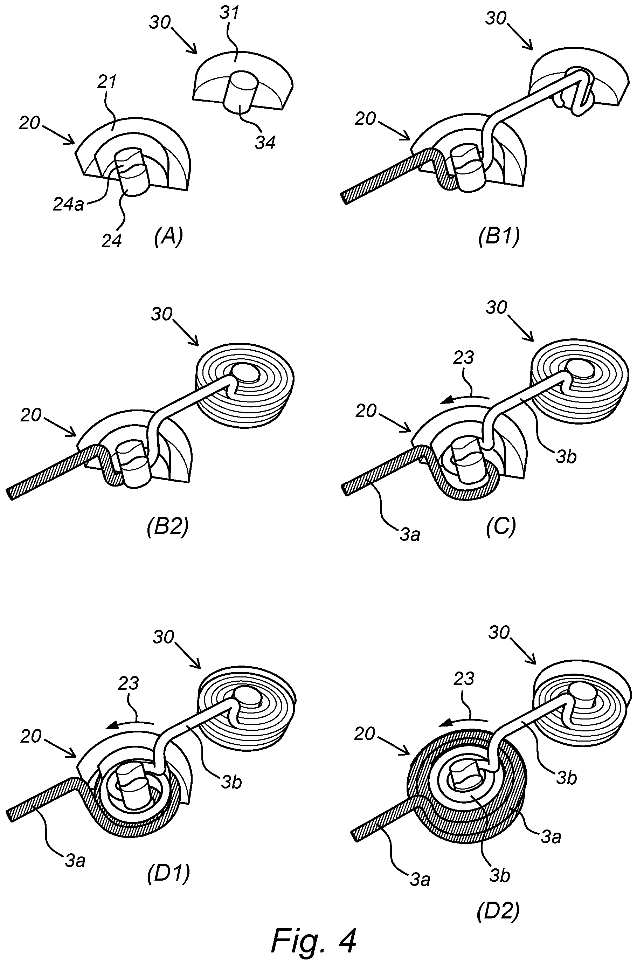

The above sequence can be carried out in any type of storage unit (20, 30). Figure 4 for instance illustrates the method steps (A) to (D) for two carousels (20, 30) positioned side by side, wherein the first storage unit 30 may be stationary. A first step of the embodiment of the method shown comprises (A) providing a first storage unit 30 and a second storage unit 20, each comprising a cylindrical body (31, 21) for arranging the cable 3. In second steps (B1, B2) the cable 3 is carried on the cable trays (13, 14) from a source through the passage 24a of the cylindrical core 24 of the second storage unit 20 and further to the first storage unit 30 and the cable is reeled in on the first storage unit 30 to a substantially 100% filling. A third step (C) involves rotating the second storage unit 20 in its reeling direction 23 and, due to the fact that the cable 3 is caught by running through the passage 24a of its core 24, the second storage unit 20 in steps (D1, D2) simultaneously reels in a part 3a of the seized cable 3 originating from the source and another part 3b of the seized cable 3 originating from the first storage unit 30. The second storage unit 20 is filled from the two sources until a second filling degree is reached, preferably until the second storage unit is filled for substantially 100%. The final filling degree of the first storage unit 30 will be less than 100% since a part 3b of the cable 3 was unreeled from the first storage unit 30 in the process. Indeed, in the embodiment shown, the first storage unit 30 is now half full only. Therefore the total cable length spooled onto the storage units (20, 30) is 75% of the full capacity of the two storage units (20, 30) together. However, the cable is 150% longer than it could be if both storage units (20, 30) were filled completely, since this would require a cut in the cable 3.

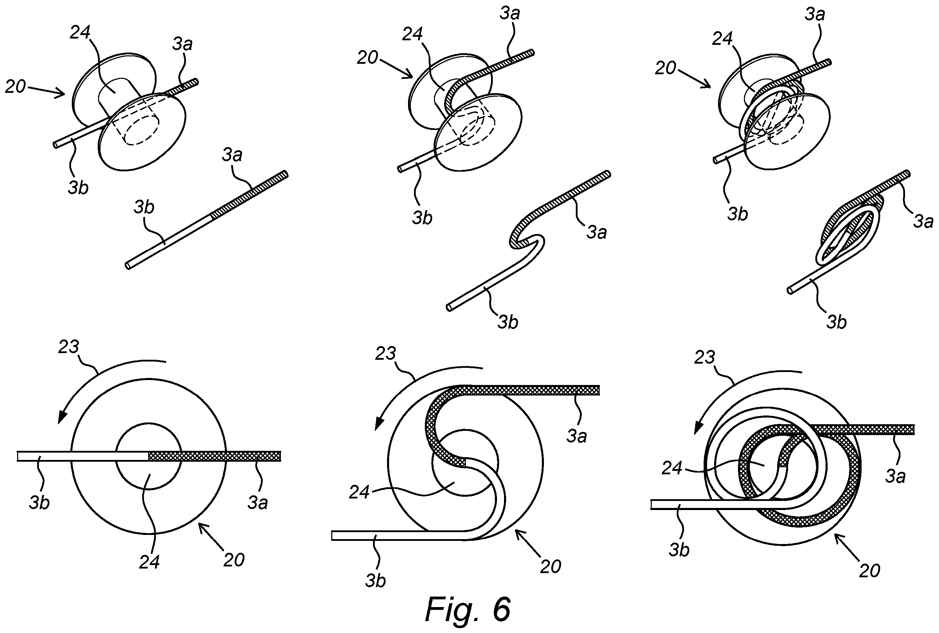

Step (B) of the method shown in figure 4 requires that the cable 3 is fed through the passage 24a of the core 4 of the second storage unit 20. As is more clearly shown in figure 6, this may involve some extreme bending of the cable 3, and care should be taken to prevent bending the cable over a radius that is lower than the minimum bending radius (MBR) of the cable 3. A preferred storage unit (20, 30) comprises a turntable, described further below.

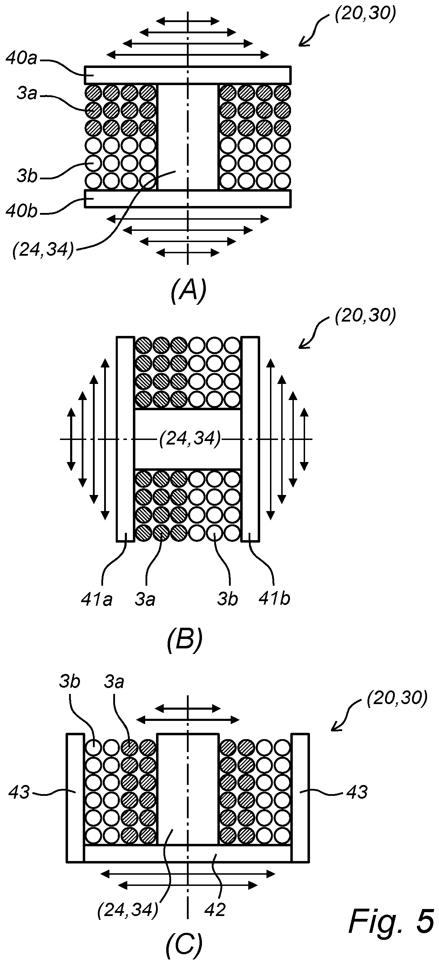

The storage units may comprise any structure suitable for temporarily storing a length of cable. As shown in figure 5, the storage devices may comprise a reel (figure 5B), a carousel (figure 5A), a turntable or a static tank (5C), or a combination of these.

Suitable definitions in the context of the invention are the following:
Efficiency: the efficiency of cable loading is defined as the actual total uninterrupted cable length spooled onto the total number of storage devices considered divided by the sum of the capacities of each individual storage device considered. When considering two storage units where one is completely full and one is half full, the efficiency is (50% + 100%) / (100% + 100%) = 75%.

The carousel (20, 30) shown in figure 5A has a cylindrical core (24, 34) that is oriented substantially vertical, and carries a top and bottom flange (40a, 40b). A carousel may be driven in a rotation direction during loading and unloading a cable 3. The weight of the cable 3 is evenly distributed into the foundation through the bottom flange 40b. Preferably some form of back tension is applied for decent spooling (loss of back-tension may cause an entire wrap or layer to drop down). A carousel is typically filled wrap by wrap, from core to outer diameter.

The reel (20, 30) shown in figure 5B has a horizontally oriented core shaft (24, 34) and two vertically disposed flanges (41a, 41b). A reel may be driven in a rotation direction during loading and unloading a cable 3. The weight of the stored cable 3 is transferred through bearings of the core shaft (24, 34). Preferably, some form of back tension is applied, counter-acting the effects of gravity, and a reel is typically filled layer by layer, from the core to the outer diameter.

The turntable, or alternatively static tank (20, 30), shown in figure 5C has a vertically disposed inner core (24, 34), surrounded by an outer cylindrical retaining wall 43, and a bottom flange 42. A turntable may be driven in a rotation direction during loading and unloading a cable 3, whereas the static tank is not rotated. The weight of the stored cable 3 is evenly distributed over the bottom flange 42 and transferred to a suitable foundation. Back tension is not necessary. A turntable or static tank is typically filled layer by layer, from bottom flange to top.

Although storage units are preferably cylindrical, they may adopt other shapes, such as oval shapes. They may be provided with specific storage unit properties, such as partitions and core extenders for instance.

The device according to the invention may comprise more than two storage units arranged such that a storage unit n+1 when rotating in the reeling direction can simultaneously reel in a part of the cable originating from the source and another part of the cable originating from a storage unit n.

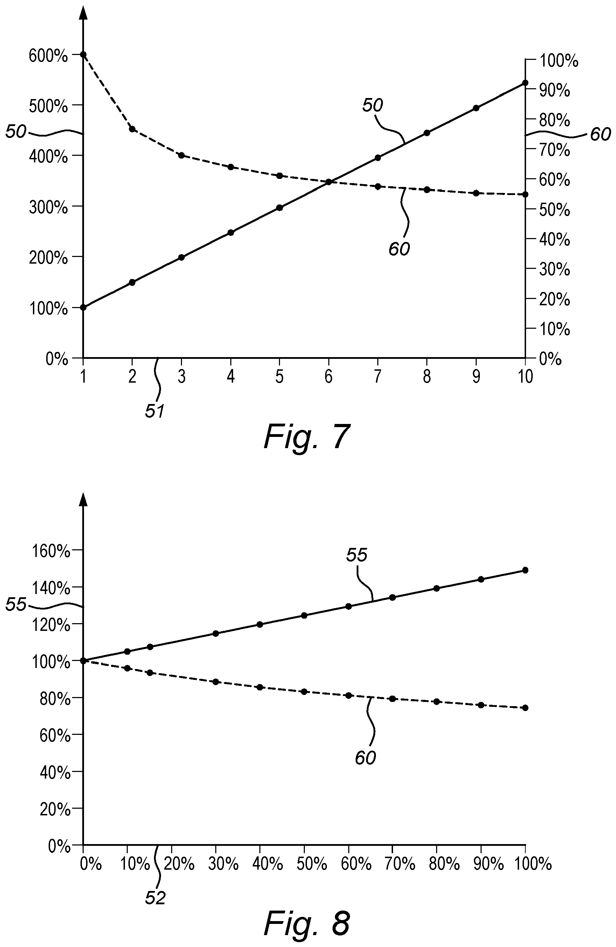

Figure 7 illustrates the total uninterrupted cable length 50 spooled onto the total number of storage devices (as a percentage of the length for one storage device) and the efficiency 60 versus the number 51 of storage devices used. It can be concluded from this figure that a single storage device has the maximum efficiency of 100% of its capacity. Efficiency is seen to drop to 75% for two devices, 68% for three devices, and further to a limit value of 50% for larger numbers of devices. The total storage length however increases linearly with an increasing number of devices, each additional device adding 50% to the total storage length.

The device according to the invention may also comprise storage units of different circumferential size, for instance diameter.

Figure 8 illustrates the total cable capacity 55 (as a percentage of the largest storage unit's capacity) as a function of the capacity ratio 52 of the smallest over the largest storage device (in percent). It can be concluded from this figure that the larger the capacity differences between two storage devices, the higher the efficiency. Further, two equally-sized storage devices have an efficiency of 75%. When selecting storage devices for a certain required capacity, it is most efficient to choose one storage device as large as possible and selecting the smallest possible device to contain the additionally required capacity.

A further efficiency increase may be obtained when at least two top-loading storage devices are used, such as turntables or static tanks. In such a configuration, cable is spooled from a first storage device to a second storage device near the core of said second storage device, while cable is also spooled from a source to the second storage device near the outside diameter of said second storage device. This configuration may yield an increased efficiency of 80% (relative to 75%). The efficiency gain may be attributed to the fact that a wrap or layer near the core of a storage device holds less cable length than a wrap or layer near the outer diameter of the storage device.

## Claims

1. A vessel (1) for laying cables on or in a sea bed, comprising a device for reeling in a cable (3) from a source and temporarily storing the cable, the device comprising
- a first; (30) and a second (20) storage unit, each comprising a cylindrical body (21, 31) for arranging the cable, wherein a cylinder longitudinal axis (32) of the first storage unit (30) does not coincide with a rotation axis of the second storage unit;
- support means (13, 14) for carrying the cable from the source to cable seizing means (24, 24a) of the second storage unit and further to the first storage unit;
wherein
- the first storage unit (30) is configured to reel in the cable (3) from the source;
- the second storage unit (20) is rotatable around the rotation axis parallel to the cylinder longitudinal axis (22) of the second storage unit (20) in a reeling direction, in which the cable is reeled in from the source; and
- the storage units (20, 30) are arranged such that the second storage unit (20) when rotating in the reeling direction simultaneously reels in a part of the cable (3) originating from the source and another part of the cable (3) originating from the first storage unit, wherein further
- the cable seizing means (24, 24a) of the second storage unit (20) comprise a centrally of the second storage unit (20) disposed cylindrical core (24) and are configured to seize the cable (3) such that a rotation of the second storage unit (20) winds the cable around the centrally disposed core (24) from opposite sides of the core, and
- the centrally disposed core (24) of the cable seizing means is provided with a passage (24a) for the cable extending in a cross-direction (24b) of the core (24).

2. Vessel according to claim 1, wherein the cylinder longitudinal axis (22, 32) of the first and/or second storage unit extends in a vertical direction.

3. Vessel according to any one of the previous claims, wherein the first storage unit (30) is rotatable around a rotation axis parallel to the cylinder longitudinal axis (32) of the first storage unit (30) in a reeling direction in which the cable is reeled in from the source.

4. Vessel according to any one of the preceding claims, comprising more than two storage units arranged such that a storage unit n+1 when rotating in the reeling direction can simultaneously reel in a part of the cable originating from the source and another part of the cable originating from a storage unit n.

5. Vessel according to any one of the preceding claims, comprising storage units of different circumferential size.

6. Vessel according to any one of the preceding claims, wherein the first and/or the second storage unit comprises a top-loading storage device, such as a turntable or a static tank, or a combination of these.

7. Vessel according to any one of the preceding claims, wherein the vessel has a deck (2) and at least two of the storage units are arranged below the deck.

8. Method for reeling in a cable (3) from a source and temporarily storing the cable on a vessel (1) for laying cables on or in a sea bed according to claim 1, the method comprising
- providing the first and a second storage unit (20, 30) on the vessel, each comprising the cylindrical body for arranging the cable;
- carrying the cable on the support means (13, 14) from a source to the cable seizing means (24, 24a) of the second storage unit (20) and further to the first storage unit (30);
- reeling in the cable on the first storage unit (30) to a first filling degree; rotating the second storage unit; (20) around a rotation axis parallel to the cylinder longitudinal axis (22) of the second storage unit (20) in a reeling direction to simultaneously reel in a part of the seized cable originating from the source and another part of the seized cable originating from the first storage unit (30) until a second filling degree of the second storage unit is reached, wherein ; the cylinder longitudinal axis (32) of the first storage unit (30) does not coincide with the rotation axis of the second storage unit; unit (20); wherein the cable seizing means (24, 24a) of the second storage unit (20) comprise the centrally disposed core (24) and seize the cable such that a rotation of the second storage unit (20) winds the cable around the centrally disposed core from opposite sides of the core; wherein the centrally disposed core of the cable seizing means is provided with the passage (24a) extending in a cross-direction of the core (24) and the cable is seized by the seizing means by providing it through the passage. passage (24a).

9. Method according to claim 8, wherein the first and the second filling degree comprises a substantially 100% filling.

10. Method according to any one of claims 8-9, wherein the first storage unit (30) rotates around a rotation axis parallel to the cylinder longitudinal axis (32) of the first storage unit (30) in a reeling direction to reel in the cable.

11. Method according to any one of claims 8-10, wherein the cable originating from the source is seized by looping it around a cylindrical core of the second storage unit (20).

12. Method according to any one of claims 8-11, comprising more than two storage units arranged such that rotating a storage unit n+1 in a reeling direction simultaneously reels in a part of the seized cable originating from the source and another part of the seized cable originating from a storage unit n.

13. Method according to any one of claims 8-12, comprising storage units (20, 30) of different circumferential size.

14. Method according to any one of claims 8-13, wherein the first and/or the second storage unit (20, 30) comprise a reel, a carousel, a turntable or a static tank, or a combination of these.

15. Method according to any one of claims 8-14, wherein the vessel has a deck (2) and at least two of the storage units are arranged below the deck.

16. Method for laying a cable on or in an sea bed, wherein a vessel according to any one of the claims 1-7 is provided with a quantity of stored cable in accordance with a method according to any one of claims 8-15, the vessel sails on water and stored cable is unreeled from the first and second storage unit, brought overboard and laid on or in the sea bed.

## Patentansprüche

1. Schwimmende Vorrichtung (1) zum Verlegen von Kabeln auf oder in einem Meeresboden, mit einer Einrichtung zum Aufwickeln eines Kabels (3)
von einer Quelle und zeitweise Lagerung des Kabels, wobei die Einrichtung aufweist:
- eine erste (30) und eine zweite (20) Lagereinheit, die zum Anordnen des Kabels jeweils einen zylindrischen Körper (21, 31) umfasst, wobei eine Zylinderlängsachse (32) der ersten Lagereinheit (30) mit einer Drehachse der zweiten Lagereinheit nicht zusammenfällt;
- Stützmittel (13, 14) zum Tragen des Kabels von der Quelle zu Kabelerfassungsmitteln (24, 24a) der zweiten Lagereinheit und weiter zur ersten Lagereinheit;
wobei:
- die erste Lagereinheit (30) so ausgebildet ist, dass sie das Kabel (3) von der Quelle aufwickelt;
- die zweite Lagereinheit (20) um die Rotationsachse parallel zur Zylinderlängsachse (22) der zweiten Lagereinheit (20) drehbar ist in einer Aufwickelrichtung, in der das Kabel von der Quelle eingeholt wird; und
- die Lagereinheiten (20, 30) so angeordnet sind, dass die zweite Lagereinheit (20) beim Drehen in Aufwickelrichtung gleichzeitig einen Teil des von der Quelle kommenden Kabels (3) und einen anderen Teil des von der ersten Lagereinheit kommenden Kabels (3) aufwickelt,
wobei ferner- die Kabelerfassungsmittel (24, 24a) der zweiten Lagereinheit (20) einen zentral von der zweiten Lagereinheit (20) angeordneten zylindrischen Kern (24) aufweisen und so ausgebildet sind, dass sie das Kabel (3) derart erfassen, dass eine Drehung der zweiten Lagereinheit (20) das Kabel von gegenüberliegenden Seiten des Kerns um den zentral angeordneten Kern wickelt, und
- der zentral angeordnete Kern (24) der Kabelerfassungsmittel mit einem Durchgang (24a) für das Kabel versehen ist, der sich in einer Querrichtung (24b) des Kerns (24) erstreckt.

2. Schwimmende Vorrichtung nach Anspruch 1, wobei sich die Zylinderlängsachse (22, 32) der ersten und/oder zweiten Lagereinheit in eine vertikale Richtung erstreckt.

3. Schwimmende Vorrichtung nach einem der vorhergehenden Ansprüche, wobei die erste Lagereinheit (30) um eine zur Zylinderlängsachse (32) der ersten Lagereinheit (30) parallele Drehachse in einer Aufwickelrichtung, in der das Kabel von der Quelle eingeholt wird, drehbar ist.

4. Schwimmende Vorrichtung nach einem der vorhergehenden Ansprüche, mit mehr als zwei Lagereinheiten, die so angeordnet sind, dass eine Lagereinheit n+1 bei Drehung in Aufwickelrichtung gleichzeitig einen Teil des von der Quelle kommenden Kabels und einen anderen Teil des von einer Lagereinheit n kommenden Kabels einholen kann.

5. Schwimmende Vorrichtung nach einem der vorhergehenden Ansprüche, welche Lagereinheiten von unterschiedlicher Umfangsgröße aufweist.

6. Schwimmende Vorrichtung nach einem der vorhergehenden Ansprüche, wobei die erste und/oder die zweite Lagereinheit eine von oben zu beladende Lagervorrichtung, wie einen drehbaren oder einen statischen Behälter, oder eine Kombination davon umfasst.

7. Schwimmende Vorrichtung nach einem der vorhergehenden Ansprüche, wobei die schwimmende Vorrichtung ein Deck (2) aufweist und wobei mindestens zwei der Lagereinheiten unterhalb des Decks angeordnet sind.

8. Verfahren zum Einholen eines Kabels (3) von einer Quelle und zum zeitweisen Lagern des Kabels auf einer schwimmenden Vorrichtung (1) zum Verlegen von Kabeln auf oder in einem Meeresboden nach Anspruch 1, wobei das Verfahren folgende Schritte aufweist:
- Bereitstellen der ersten und einer zweiten Lagereinheit (20, 30) auf der schwimmenden Vorrichtung, jeweils bestehend aus dem zylindrischen Körper zum Unterbringen des Kabels;
- Tragen des Kabels auf den Stützmitteln (13, 14) von einer Quelle zu den Kabelerfassungsmitteln (24, 24a) der zweiten Lagereinheit (20) und weiter zu der ersten Lagereinheit (30);
- Einholen des Kabels auf die erste Lagereinheit (30) bis zu einem ersten Füllgrad; Drehen der zweiten Lagereinheit (20) um eine zur Zylinderlängsachse (22) parallele Drehachse der zweiten Lagereinheit (20) in einer Aufwickelrichtung, um gleichzeitig einen Teil des aufgewickelten Kabels, das von der Quelle stammt, und einen anderen Teil des aufgewickelten Kabels, das von der ersten Lagereinheit (30) stammt, einzuholen, bis ein zweiter Füllgrad der zweiten Lagereinheit erreicht ist,
wobei die Zylinderlängsachse (32) der ersten Lagereinheit (30) nicht mit der Drehachse der zweiten Lagereinheit (20) zusammenfällt;
wobei die Kabelerfassungsmittel (24, 24a) der zweiten Lagereinheit (20) den zentral angeordneten Kern (24) umfassen und das Kabel so erfassen, dass eine Drehung der zweiten Lagereinheit (20) das Kabel von gegenüberliegenden Seiten des Kerns um den zentral angeordneten Kern wickelt;
wobei der zentral angeordnete Kern der Kabelerfassungsmittel mit dem Durchgang (24a) versehen ist, der sich in einer Querrichtung des Kerns (24) erstreckt, und das Kabel durch die Erfassungsmittel erfaßt wird, indem es durch den Durchgang (24a) hindurchgeführt wird.

9. Verfahren nach Anspruch 8, wobei der erste und der zweite Füllgrad eine im Wesentlichen 100%ige Füllung umfasst.

10. Verfahren nach einem der Ansprüche 8 bis 9, wobei sich die erste Lagereinheit (30) um eine zur Zylinderlängsachse (32) der ersten Lagereinheit (30) parallele Drehachse in einer Aufwickelrichtung dreht, um das Kabel einzuholen.

11. Verfahren nach einem der Ansprüche 8 bis 10, bei dem das von der Quelle ausgehende Kabel erfasst wird, indem es um einen zylindrischen Kern der zweiten Lagereinheit (20) geschlungen wird.

12. Verfahren nach einem der Ansprüche 8 bis 11, mit mehr als zwei Lagereinheiten, die so angeordnet sind, dass eine Lagereinheit n+1 bei Drehung in der Aufwickelrichtung gleichzeitig einen Teil des von der Quelle kommenden erfassten Kabels und einen anderen Teil des von einer Lagereinheit n kommenden erfassten Kabels einholt.

13. Verfahren nach einem der Ansprüche 8 bis 12, wobei Lagereinheiten (20, 30) unterschiedlicher Umfangsgröße verwendet werden.

14. Verfahren nach einem der Ansprüche 8 bis 13, wobei die erste und/oder die zweite Lagereinheit (20, 30) eine Trommel, einen Drehteller, einen drehbaren oder einen statischen Behälter oder eine Kombination davon umfasst.

15. Verfahren nach einem der Ansprüche 8 bis 14, wobei die schwimmende Vorrichtung ein Deck aufweist und mindestens zwei der Lagereinheiten unter dem Deck angeordnet sind.

16. Verfahren zum Verlegen eines Kabels auf oder in einem Meeresboden, wobei eine schwimmende Vorrichtung nach einem der Ansprüche 1 bis 7 mit einer Menge an gelagertem Kabel gemäß einem Verfahren nach einem der Ansprüche 8 bis 15 versehen wird, die schwimmende Vorrichtung auf Wasser bewegt wird und das gelagerte Kabel von der ersten und zweiten Lagereinheit abgewickelt, über Bord gebracht und auf oder in den Meeresboden gelegt wird.

## Revendications

1. Navire (1) de pose de câbles sur ou dans un fond marin, comprenant un dispositif d'enroulement d'un câble (3) à partir d'une source et de stockage temporaire du câble, le dispositif comprenant
- une première (30) et une seconde (20) unité de stockage, comprenant chacune un corps cylindrique (21, 31) pour agencer le câble, dans lequel un axe longitudinal de cylindre (32) de la première unité de stockage (30) ne coïncide pas avec un axe de rotation de la seconde unité de stockage ;
- des moyens de support (13, 14) pour transporter le câble de la source à des moyens de saisie de câble (24, 24a) de la seconde unité de stockage et en outre à la première unité de stockage ;
dans lequel
- la première unité de stockage (30) est configurée pour enrouler le câble (3) à partir de la source ;
- la seconde unité de stockage (20) est rotative autour de l'axe de rotation parallèle à l'axe longitudinal de cylindre (22) de la seconde unité de stockage (20) dans une direction d'enroulement, dans laquelle le câble est enroulé à partir de la source ; et
- les unités de stockage (20, 30) sont agencées de sorte que la seconde unité de stockage (20) lors d'une rotation dans la direction d'enroulement enroule simultanément une partie du câble (3) provenant de la source et une autre partie du câble (3) provenant de la première unité de stockage, dans lequel en outre
- les moyens de saisie de câble (24, 24a) de la seconde unité de stockage (20) comprennent une âme (24) cylindrique disposée centralement de la seconde unité de stockage (20) et sont configurés pour saisir le câble (3) de sorte qu'une rotation de la seconde unité de stockage (20) envide le câble autour de l'âme (24) disposée centralement depuis des côtés opposés de l'âme, et
- l'âme (24) disposée centralement des moyens de saisie de câble est pourvue d'un passage (24a) pour le câble s'étendant dans une direction transversale (24b) de l'âme (24).

2. Navire selon la revendication 1, dans lequel l'axe longitudinal de cylindrique (22, 32) des première et/ou seconde unités de stockage s'étend dans une direction verticale.

3. Navire selon l'une quelconque des revendications précédentes, dans lequel la première unité de stockage (30) est rotative autour d'un axe de rotation parallèle à l'axe longitudinal de cylindre (32) de la première unité de stockage (30) dans une direction d'enroulement dans laquelle le câble est enroulé à partir de la source.

4. Navire selon l'une quelconque des revendications précédentes, comprenant plus de deux unités de stockage agencées de sorte qu'une unité de stockage n+1 lors d'une rotation dans la direction d'enroulement puisse enrouler simultanément une partie du câble provenant de la source et une autre partie du câble provenant d'une unité de stockage n.

5. Navire selon l'une quelconque des revendications précédentes, comprenant des unités de stockage de taille circonférentielle différente.

6. Navire selon l'une quelconque des revendications précédentes, dans lequel les première et/ou seconde unités de stockage comprennent un dispositif de stockage à chargement par le haut, tel qu'une plaque tournante ou un réservoir d'alimentation, ou une combinaison de ceux-ci.

7. Navire selon l'une quelconque des revendications précédentes, dans lequel le navire a un pont (2) et au moins deux des unités de stockage sont agencées en dessous du pont.

8. Procédé d'enroulement d'un câble (3) à partir d'une source et de stockage temporaire du câble sur un navire (1) de pose de câbles dans ou sur un fond marin selon la revendication 1, le procédé comprenant
- la fourniture de la première et d'une seconde unité de stockage (20, 30) sur le navire, comprenant chacune le corps cylindrique pour agencer le câble ;
- le transport du câble sur les moyens de support (13, 14) d'une source aux moyens de saisie de câble (24, 24a) de la seconde unité de stockage (20) et en outre à la première unité de stockage (30) ;
- l'enroulement du câble sur la première unité de stockage (30) jusqu'à un premier degré de remplissage ;
- la rotation de la seconde unité de stockage (20) autour d'un axe de rotation parallèle à l'axe longitudinal de cylindre (22) de la seconde unité de stockage (20) dans une direction d'enroulement pour enrouler simultanément une partie du câble saisi provenant de la source et une autre partie du câble saisi provenant de la première unité de stockage (30) jusqu'à ce qu'un second degré de remplissage de la seconde unité de stockage soit atteint,
dans lequel l'axe longitudinal de cylindre (32) de la première unité de stockage (30) ne coïncide pas avec l'axe de rotation de la seconde unité de stockage (20) ;
dans lequel les moyens de saisie de câble (24, 24a) de la seconde unité de stockage (20) comprennent l'âme (24) disposée centralement et saisissent le câble de sorte qu'une rotation de la seconde unité de stockage (20) envide le câble autour de l'âme disposée centralement depuis des côtés opposés de l'âme ; dans lequel l'âme disposée centralement des moyens de saisie de câble est pourvue du passage (24a) s'étendant dans une direction transversale de l'âme (24) et le câble est saisi par les moyens de saisie en le fournissant à travers le passage (24a).

9. Procédé selon la revendication 8, dans lequel le premier et le second degré de remplissage comprennent un remplissage de sensiblement 100 %.

10. Procédé selon l'une quelconque des revendications 8 et 9, dans lequel la première unité de stockage (30) entre en rotation autour d'un axe de rotation parallèle à l'axe longitudinal de cylindre (32) de la première unité de stockage (30) dans une direction d'enroulement pour enrouler le câble.

11. Procédé selon l'une quelconque des revendications 8 à 10, dans lequel le câble provenant de la source est saisi en étant amené à faire une boucle autour d'une âme cylindrique de la seconde unité de stockage (20).

12. Procédé selon l'une quelconque des revendications 8 à 11, comprenant plus de deux unités de stockage agencées de sorte qu'une rotation d'une unité de stockage n+1 dans une direction d'enroulement enroule simultanément une partie du câble saisi provenant de la source et une autre partie du câble saisi provenant d'une unité de stockage n.

13. Procédé selon l'une quelconque des revendications 8 à 12, comprenant des unités de stockage (20, 30) de taille circonférentielle différente.

14. Procédé selon l'une quelconque des revendications 8 à 13, dans lequel les première et/ou seconde unités de stockage (20, 30) comprennent un enrouleur, un carrousel, une plaque tournante ou un réservoir d'alimentation, ou une combinaison de ceux-ci.

15. Procédé selon l'une quelconque des revendications 8 à 14, dans lequel le navire a un pont et au moins deux des unités de stockage sont agencées en dessous du pont.

16. Procédé de pose d'un câble sur ou dans un fond marin, dans lequel un navire selon l'une quelconque des revendications 1 à 7 est pourvu d'une quantité de câble stocké conformément à un procédé selon l'une quelconque des revendications 8 à 15, le navire navigue sur l'eau et le câble stocké est déroulé à partir des première et seconde unités de stockage, amené par-dessus bord et posé sur ou dans le fond marin.
